(19) Europäisches Patentamt
European Patent Office
Office européen des brevets

(11) **EP 3 117 181 B1**

(12) **FASCICULE DE BREVET EUROPEEN**

(45) Date de publication et mention de la délivrance du brevet:
**12.12.2018 Bulletin 2018/50**

(21) Numéro de dépôt: **15709471.5**

(22) Date de dépôt: **10.03.2015**

(51) Int Cl.:
**G01B 11/25** (2006.01)     **G06T 7/00** (2017.01)

(86) Numéro de dépôt international:
**PCT/EP2015/054985**

(87) Numéro de publication internationale:
**WO 2015/135952 (17.09.2015 Gazette 2015/37)**

(54) **PROCÉDÉ DE DÉTERMINATION D'IMAGES TRIDIMENSIONNELLES D'UN OBJET**

VERFAHREN ZUR BESTIMMUNG VON DREIDIMENSIONALEN BILDERN EINES OBJEKTES

METHOD FOR DETERMINING THREE-DIMENSIONAL IMAGES OF AN OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2014 FR 1452052**

(43) Date de publication de la demande:
**18.01.2017 Bulletin 2017/03**

(73) Titulaire: **VIT**
**38120 Saint-Egreve (FR)**

(72) Inventeurs:
• **PERRIOLLAT, Mathieu**
**F-38120 Saint Egreve (FR)**
• **GERBELOT, Rémi**
**F-38120 Saint Egreve (FR)**

(74) Mandataire: **Cabinet Beaumont**
**4, Place Robert Schuman**
**B.P. 1529**
**38025 Grenoble Cedex 1 (FR)**

(56) Documents cités:
EP-A2- 1 251 327      DE-A1-102007 034 689
US-A1- 2011 287 387      US-B1- 7 440 590

## Description

Domaine

La présente invention concerne de façon générale les systèmes d'inspection optique et, plus particulièrement, les systèmes de détermination d'images tridimensionnelles destinés à l'analyse en ligne d'objets, notamment de circuits électroniques.

Exposé de l'art antérieur

Les systèmes d'inspection optique sont généralement utilisés pour vérifier le bon état d'un objet avant sa mise sur le marché ou pour vérifier la conformité d'un objet avant une étape de fabrication à forte valeur ajoutée. Ils permettent notamment de déterminer une image tridimensionnelle, ou image 3D, de l'objet qui peut être analysée pour rechercher d'éventuels défauts. Dans le cas d'un circuit électronique comprenant, par exemple, un circuit imprimé équipé de composants électroniques, l'image 3D du circuit électronique peut être utilisée notamment pour inspecter le bon état des soudures des composants électroniques sur le circuit imprimé.

Une image 3D d'un objet correspond à un nuage de points, par exemple plusieurs millions de points, d'au moins une partie de la surface extérieure de l'objet dans lequel chaque point de la surface est repéré par des coordonnées (x, y, z) où les coordonnées (x, y) correspondent à la position de la projection du point dans un plan de référence et où z correspond à la hauteur du point par rapport au plan de référence.

Un procédé de détermination d'une image 3D d'un objet peut comprendre une séquence de projections sur l'objet d'une lumière structurée, c'est-à-dire une image comprenant des motifs lumineux prédéterminés et l'acquisition d'images à deux dimensions, ou image 2D, de l'objet ainsi éclairé. L'image 3D est déterminée à partir des images 2D acquises en tenant compte des déformations des motifs lumineux réfléchis sur l'objet. Un exemple de motifs lumineux utilisé de façon classique pour la détermination d'une image 3D comprend une alternance de franges parallèles claires et sombres. De façon générale, les motifs lumineux projetés sur le plan de référence présentent généralement une périodicité spatiale avec un pas p donné.

Un inconvénient est que, contrairement à ce que prévoit le calcul théorique, les hauteurs des points de l'image 3D qui sont déterminées peuvent différer des dimensions réelles de l'objet lorsque le pas varie en fonction des caractéristiques de l'objet. En particulier, plus le pas est grand, plus l'image 3D peut s'écarter des dimensions réelles de l'objet. Toutefois, il peut être souhaitable d'utiliser une lumière structurée comportant des motifs ayant un grand pas. En effet, la hauteur maximale de l'objet dont une image 3D peut être déterminée est d'autant plus grande que le pas est grand.

Les documents DE 10 2007 034689, EP 1 251 327, US 2011/287387 et US 7 440 590 décrivent des procédés et systèmes de détermination d'images tridimensionnelles.

Résumé

Un objet d'un mode de réalisation est de pallier tout ou partie des inconvénients des procédés et systèmes de détermination d'images 3D décrits précédemment.

Un autre objet d'un mode de réalisation est de permettre la détermination d'une image 3D d'un objet dont la hauteur maximale peut-être supérieure à plusieurs millimètres.

Un autre objet d'un mode de réalisation est que le dispositif de détermination d'une image 3D peut être mis en oeuvre en utilisant des systèmes d'inspection optiques connus.

Ainsi, selon l'invention, le procédé de détermination d'images tridimensionnelles d'un objet comprend :

la projection par au moins un projecteur de plusieurs images sur l'objet, chaque image projetée étant déterminée par modulation de premiers motifs lumineux comprenant la superposition et/ou la multiplication des premiers motifs lumineux et de deuxièmes motifs lumineux, les premiers motifs lumineux étant déphasés d'un premier déphasage d'une image projetée à la suivante et les deuxièmes motifs lumineux étant déphasés d'une image projetée à la suivante d'un deuxième déphasage différent du premier déphasage, le deuxième déphasage étant appliqué aux deuxièmes motifs lumineux et étant choisi de sorte que la contribution due à l'intensité lumineuse des deuxièmes motifs est nulle ;

l'acquisition, pour chaque image projetée, d'au moins une image bidimensionnelle de l'objet par au moins un capteur d'images, notamment au moins deux capteurs d'images ; et

la détermination de la hauteur de chaque point de l'objet à partir des images bidimensionnelles acquises comme si seuls les premiers motifs avaient été projetés, la modulation étant sélectionnée de façon que les erreurs de détermination soient inférieures à celles obtenues en l'absence de modulation.

Selon un mode de réalisation, le procédé comprend, en outre, une étape de démodulation des images bidimensionnelles acquises et l'étape de détermination de la hauteur de chaque point de l'objet est réalisée à partir des images bidimensionnelles démodulées.

Selon un mode de réalisation, les premiers motifs ont une première orientation par rapport à une direction privilégiée du projecteur et du capteur d'images ou des deux capteurs d'images et le procédé comprend la projection d'images ayant des franges inclinées par rapport à la direction privilégiée selon une deuxième orientation différente de la première orientation.

Selon un mode de réalisation, les premiers motifs lumineux comprennent des premières franges.

Selon un mode de réalisation, les deuxièmes motifs lumineux comprennent des deuxièmes franges.

Selon un mode de réalisation, les premières franges sont droites et parallèles et les deuxièmes franges sont droites et parallèles.

Selon un mode de réalisation, les deuxièmes franges sont inclinées par rapport aux premières franges d'un angle compris entre 45° et 135°.

Selon un mode de réalisation, les premiers motifs lumineux sont périodiques selon un premier pas compris entre 1 mm et 15 mm.

Selon un mode de réalisation, les deuxièmes motifs lumineux sont périodiques selon un deuxième pas compris entre 1 mm et 15 mm.

Selon l'invention, un système de détermination d'images tridimensionnelles d'un objet comprend :

au moins un projecteur adapté à projeter plusieurs images sur l'objet, chaque image projetée étant déterminée par modulation de premiers motifs lumineux, chaque image projetée comprenant la superposition et/ou la multiplication des premiers motifs lumineux et de deuxièmes motifs lumineux, les premiers motifs lumineux étant déphasés d'un premier déphasage d'une image projetée à la suivante et les deuxièmes motifs lumineux étant déphasés d'une image projetée à la suivante d'un deuxième déphasage différent du premier déphasage, le deuxième déphasage étant appliqué aux deuxièmes motifs lumineux et étant choisi de sorte que la contribution due à l'intensité lumineuse des deuxièmes motifs est nulle ;

au moins un capteur d'images, notamment au moins deux capteurs d'images, adapté à acquérir, pour chaque image projetée, au moins une image bidimensionnelle de l'objet ; et

un module de détermination de la hauteur de chaque point de l'objet à partir des images bidimensionnelles acquises comme si seuls les premiers motifs avaient été projetés, la modulation étant sélectionnée de façon que les erreurs de détermination soient inférieures à celles obtenues en l'absence de modulation.

Selon un mode de réalisation, les premiers motifs ont une première orientation par rapport à une direction privilégiée du projecteur et du capteur d'images ou des deux capteurs d'images et le projecteur est adapté à projeter des images ayant des franges inclinées par rapport à la direction privilégiée selon une deuxième orientation différente de la première orientation.

Selon un mode de réalisation, le système comprend un module de fourniture d'images numériques et le projecteur est adapté à projeter lesdites plusieurs images sur l'objet, chacune desdites images étant formée par le projecteur à partir de l'une desdites images numériques.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

les figures 1 et 2 représentent, de façon partielle et schématique, un mode de réalisation d'un système d'inspection optique de circuit électronique ;

la figure 3 représente, de façon partielle et schématique, un autre mode de réalisation d'un système d'inspection optique de circuit électronique ;

la figure 4 représente, sous la forme d'un schéma-bloc, un exemple de procédé de détermination d'une image 3D ;

la figure 5 représente un exemple de motifs lumineux pouvant être projetés lors de la mise en oeuvre de l'exemple de procédé de détermination d'une image 3D illustré en figure 2 ;

la figure 6 est une coupe, partielle et schématique, d'un circuit imprimé ;

la figure 7 représente l'évolution de la hauteur de points en surface du circuit imprimé représenté en figure 6 en fonction du pas des motifs lumineux projetés ;

les figures 8 et 9 représentent des modes de réalisation de motifs lumineux projetés lors de la mise en oeuvre du procédé de détermination d'une image 3D ;

la figure 10 est une figure analogue à la figure 7 lorsque les motifs lumineux représentés en figure 9 sont utilisés ;

la figure 11 représente un autre mode de réalisation de motifs lumineux projetés lors de la mise en oeuvre du procédé de détermination d'une image 3D ;

la figure 12 représente, sous la forme d'un schéma-bloc, un mode de réalisation d'un procédé de détermination d'une image 3D ; et

la figure 13 représente un autre mode de réalisation de motifs lumineux projetés lors de la mise en oeuvre du procédé de détermination d'une image 3D.

Description détaillée

Par souci de clarté, de mêmes éléments ont été désignés par de mêmes références aux différentes figures et, de plus, les diverses figures ne sont pas tracées à l'échelle. Dans la suite de la description, sauf indication contraire, les termes "sensiblement", "environ" et "de l'ordre de" signifient "à 10 % près". En outre, seuls les éléments utiles à la compréhension de la présente description ont été représentés et sont décrits. En particulier, les moyens de commande du convoyeur du système d'inspection optique décrit ci-après sont à la portée de l'homme de l'art et ne sont pas décrits.

Dans la suite de la description, des modes de réalisation vont être décrits dans le cas de l'inspection optique de circuits électroniques. Toutefois, ces modes de réalisation peuvent s'appliquer à la détermination d'images tridimensionnelles de tous types d'objets, notamment pour l'inspection optique de pièces mécaniques. On appelle (OX) et (OY) deux directions perpendiculaires, par exemple horizontales.

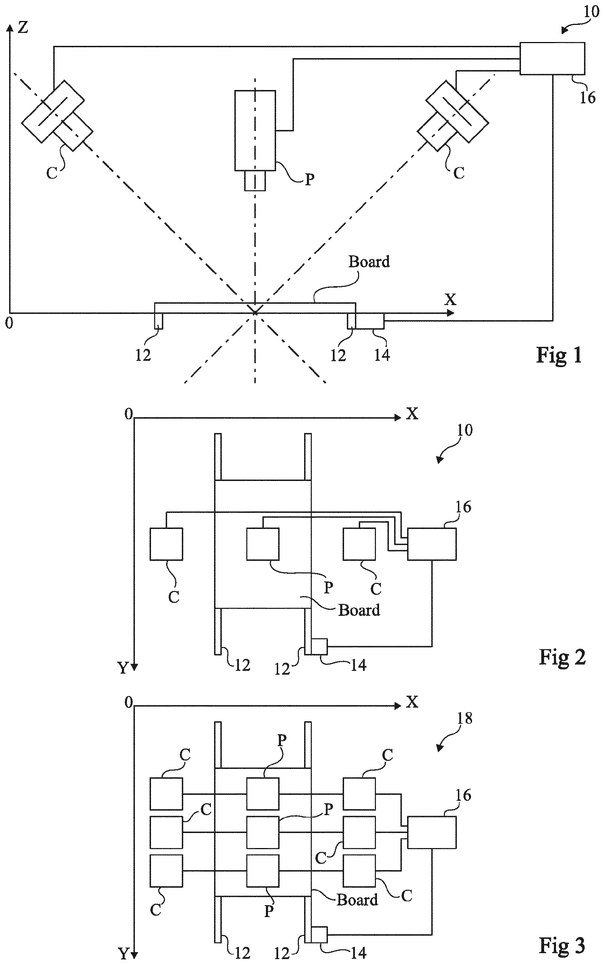

Les figures 1 et 2 sont respectivement une vue de face et une vue de dessus, très schématiques, d'un mode de réalisation d'un système 10 d'inspection d'un circuit électronique Board. On entend par circuit électronique indifféremment un ensemble de composants électroniques interconnectés par l'intermédiaire d'un support, le support seul utilisé pour réaliser cette interconnexion sans les composants électroniques ou le support sans les composants électroniques mais muni de moyens de fixation des composants électroniques. A titre d'exemple, le support est un circuit imprimé et les composants électroniques sont fixés au circuit imprimé par des joints de soudure obtenus par chauffage de blocs de pâte à souder. Dans ce cas, on entend par circuit électronique indifféremment le circuit imprimé seul (sans composants électroniques, ni blocs de pâte à souder), le circuit imprimé muni des blocs de pâte à souder et sans composants électroniques, le circuit imprimé muni des blocs de pâte à souder et des composants électroniques avant l'opération de chauffage ou le circuit imprimé muni des composants électroniques fixés au circuit imprimé par les joints de soudure.

Le système 10 permet la détermination d'une image 3D du circuit électronique Board. Le circuit électronique Board est placé sur un convoyeur 12, par exemple un convoyeur plan. Le convoyeur 12 est susceptible de déplacer le circuit Board parallèlement à la direction (OY). A titre d'exemple, le convoyeur 12 peut comprendre un ensemble de courroies et de galets entraînés par un moteur électrique tournant 14. A titre de variante, le convoyeur 12 peut comprendre un moteur linéaire déplaçant un charriot sur lequel repose le circuit électronique Board. Le circuit Board correspond, par exemple, à une carte rectangulaire ayant une longueur et une largeur variant de 50 mm à 550 mm.

Le système 10 comporte un dispositif de projection d'images P comprenant au moins un projecteur, un seul projecteur P étant représenté en figure 1. Le projecteur P est relié à un système informatique 16 de contrôle, d'acquisition et de traitement d'images. Lorsque plusieurs projecteurs P sont présents, les projecteurs P peuvent être sensiblement alignés selon une direction parallèle à la direction (OY). Le système 16 peut comprendre un ordinateur ou un microcontrôleur comportant un processeur et une mémoire non volatile dans laquelle sont stockées des séquences d'instructions dont l'exécution par le processeur permet au système 16 de réaliser les fonctions souhaitées. A titre de variante, le système 16 peut correspondre à un circuit électronique dédié. Le moteur électrique 14 est, en outre, commandé par le système 16.

Le système 10 comporte, en outre, un dispositif d'acquisition d'images C comprenant au moins une caméra, par exemple une caméra numérique. A titre d'exemple, deux caméras C sont représentées sur les figures 1 et 2. Chaque caméra C est reliée au système informatique 16 de contrôle, d'acquisition et de traitement d'images. Lorsqu'une seule caméra C est présente, la caméra C et le projecteur P peuvent être alignés parallèlement à une direction (OX). Lorsque plusieurs caméras C sont présentes, les caméras C peuvent être disposées de part et d'autre du projecteur ou des projecteurs P, parallèlement à la direction (OX). Lorsque plusieurs groupes caméras C et projecteurs P sont présents, ces groupes peuvent être sensiblement alignés parallèlement à la direction (OY). La direction (OX) est parallèle à une direction privilégiée du dispositif d'acquisition d'images C et/ou du dispositif de projection d'image P. A titre d'exemple, lorsqu'une seule caméra C est présente, la direction (OX) peut être parallèle à la droite passant par le centre optique de la caméra et le centre optique du projecteur et, lorsque deux caméras C sont présentes, la direction (OX) peut être parallèle à la droite passant par les centres optiques des caméras. Dans la suite de la description, on appelle image bidimensionnelle, ou image 2D, une image numérique acquise par l'une des caméras C et correspondant à une matrice de pixels. Dans la suite de la description, sauf indication contraire, le terme "image" fait référence à une image 2D.

Les moyens de commande du convoyeur 12, de la caméra C et du projecteur P du système d'inspection optique 10 décrit précédemment sont à la portée de l'homme de l'art et ne sont pas décrits plus en détail. A titre de variante, la direction de déplacement du circuit Board peut être une direction horizontale perpendiculaire à la direction (OY) représentée en figure 2. Dans le présent mode de réalisation, les caméras C et le projecteur P sont fixes et le circuit électronique Board est déplacé par rapport à la caméra C et au projecteur P par l'intermédiaire du convoyeur 12. A titre de variante, le circuit électronique Board est fixe et la caméra ou les caméras C et le projecteur P sont déplacés par rapport au circuit électronique Board par tout dispositif de convoyage adapté.

Le système 10 est adapté à déterminer une image 3D du circuit Board. Une image 3D du circuit Board correspond à un nuage de points, par exemple plusieurs millions de points, d'au moins une partie de la surface extérieure du circuit Board dans lequel chaque point de la surface est repéré par ses coordonnées (x, y, z) déterminées par rapport à un repère d'espace à trois dimensions $R_{REF}$ (OX, OY, OZ). Dans la suite de la description, le plan (OX, OY) est appelé plan de référence $PI_{REF}$. La coordonnée z d'un point de la surface de l'objet correspond alors à la hauteur du point mesurée par rapport au plan de référence $PI_{REF}$. A titre d'exemple, le plan de référence $PI_{REF}$ correspond au plan contenant la face supérieure ou la face inférieure du circuit imprimé. Le plan $PI_{REF}$ peut être horizontal. De préférence, la direction (OZ) est perpendiculaire au plan (OX, OY), c'est-à-dire perpendiculaire aux faces supérieure ou inférieure du circuit imprimé.

La figure 3 est une vue analogue à la figure 2 d'un autre mode de réalisation d'un système 18 d'inspection optique comprenant trois ensembles projecteur P - caméras C alignés selon la direction (OY).

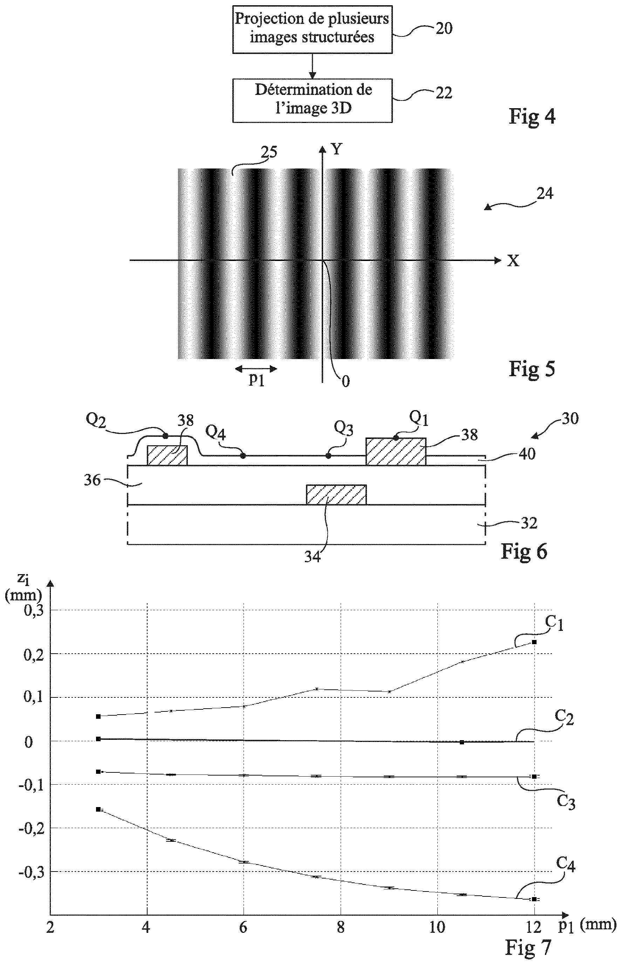

La figure 4 illustre, sous la forme d'un schéma-bloc, les étapes d'un exemple de procédé de détermination d'une image 3D pouvant être mis en oeuvre par le système 10.

A l'étape 20, le projecteur P projette successivement, sur le circuit Board à inspecter, des images comportant chacune des motifs lumineux déterminés. Au cours de la projection de chaque image à motifs lumineux déterminés, au moins une image de l'objet éclairé est acquise par chaque caméra C. Le procédé se poursuit à l'étape 22.

A l'étape 22, le système 16 de traitement d'images détermine une image 3D du circuit Board à partir des images 2D acquises par chaque caméra C.

La figure 5 représente un exemple connu d'image 24 pouvant être projetée à l'étape 20 par le projecteur P sur le circuit Board lors de la mise en oeuvre d'un procédé de détermination d'une image 3D. Dans cet exemple, l'image 24 comprend une succession de franges lumineuses 25 droites et parallèles. Dans le présent exemple, lorsque l'image 24 représentée en figure 5 est projetée sur le plan de référence $PI_{REF}$, les franges 25 sont perpendiculaires à la direction (OX) et apparaissent avec un pas $p_1$ mesuré selon la direction (OX). De façon générale, plus le pas $p_1$ est grand, plus la hauteur maximale séparant deux points de l'image 3D pouvant être déterminés par le procédé, ou profondeur de champ, est grande. Selon une variante, les franges droites 25 peuvent être seulement sensiblement parallèles. Selon une autre variante, les franges lumineuses 25 peuvent suivre des lignes brisées parallèles ou sensiblement parallèles, et de façon générale, des courbes parallèles ou sensiblement parallèles.

Dans le présent exemple de procédé de détermination d'une image 3D, à l'étape 20, plusieurs images à motifs sont projetées successivement sur le circuit Board. Les images diffèrent les unes des autres par un décalage des motifs selon une direction privilégiée. A titre d'exemple, pour l'image 24 représentée en figure 5, un décalage correspond à déplacement des franges 25 selon la direction (OX). Une image 2D est acquise lors de la projection de chaque nouvelle image à motifs lumineux sur le circuit Board.

La figure 6 est une vue en coupe, partielle et schématique, d'un exemple de circuit imprimé 30 comprenant une couche isolante 32 sur laquelle sont réparties des pistes conductrices 34, une seule de ces pistes 34 étant représentée en figure 6. Une couche isolante 36 recouvre les pistes conductrices 34 et le reste de la couche isolante 32. Des pistes conductrices 38 s'étendent sur la couche isolante 36, deux pistes 38 étant représentées en figure 6. Le reste de la couche isolante 36 peut être recouvert d'une couche de résine 40 qui recouvre au moins partiellement certaines pistes conductrices 38.

De façon générale, une image tridimensionnelle du circuit Board correspond à un nuage d'un nombre entier M de points $Q_i$ où i est un nombre entier variant de 1 à M. A titre d'exemple, M est supérieur à plusieurs millions. Un point $Q_i$ de la surface externe du circuit Board est repéré dans le repère $R_{REF}$ par les coordonnées $(x_i, y_i, z_i)$. La coordonnée $z_i$ correspond à la hauteur du point $Q_i$ par rapport au plan $PI_{REF}$. Un procédé de détermination d'une image tridimensionnelle du circuit Board consiste à déterminer la hauteur $z_i$ de chaque point $Q_i$.

Les inventeurs ont mesuré l'évolution de hauteurs $z_i$ de différents points $Q_1$, $Q_2$, $Q_3$ et $Q_4$ de l'image 3D du circuit Board déterminée en projetant des franges 25 telles que représentées en figure 5 en fonction du pas $p_1$ des franges 25. Le point $Q_1$ est situé sur l'une des pistes conductrices 38 non recouvertes de la couche de résine 40. Le point $Q_2$ est situé sur une portion de la couche de résine 40 recouvrant l'une des pistes conductrices 38. Le point $Q_3$ est situé sur la couche de résine 40 à l'aplomb de l'une des pistes conductrices 34 prévues entre les couches isolantes 32 et 36. Le point $Q_4$ est situé sur la couche de résine 40 et ne se trouve pas à l'aplomb de l'une des pistes conductrices 34, c'est-à-dire qu'il est situé seulement à l'aplomb des couches isolantes 32 et 36.

Les essais ont été réalisés en utilisant les matériaux et les épaisseurs de couches suivantes. Les couches isolantes 32 et 36 étaient en FR4, composite de résine époxyde renforcé de fibres de verre. La couche isolante 32 avait une épaisseur entre 150 µm et 400 µm et la couche isolante 36 avait une épaisseur entre 150 µm et 800 µm. Les pistes conductrices 34 et 38 étaient en cuivre. Les pistes conductrices 34 avaient une épaisseur entre 35 $\mu$m et 70 $\mu$m et les pistes conductrices 38 avaient une épaisseur entre 35 $\mu$m et 70 $\mu$m. La couche de résine 40 correspondait à un vernis de différentes couleurs et avait une épaisseur de l'ordre de 10 $\mu$m à 15 $\mu$m à l'aplomb de $Q_2$.

La figure 7 représente des courbes $C_1$, $C_2$, $C_3$ et $C_4$ d'évolution respectivement de la hauteur $z_i$ des points $Q_1$, $Q_2$, $Q_3$ et $Q_4$ du circuit imprimé 30 représenté en figure 6 en fonction du pas $p_1$ des franges 25.

Comme cela apparaît sur la figure 7, les hauteurs mesurées pour les points $Q_1$ et $Q_4$ ne sont pas constantes en fonction du pas $p_1$ et les variations observées en fonction du pas $p_1$ dépendent du point considéré. Les inventeurs ont mis en évidence que les erreurs sur les hauteurs augmentent lorsque le pas $p_1$ augmente. Une explication serait que le rayonnement projeté pour former les franges 25 interagit avec les matériaux présents en surface du circuit 30 et en profondeur dans le circuit 30, notamment en raison de la régularité des franges 25 et du fait que certains des matériaux composant le circuit 30 sont partiellement transparents.

Les inventeurs ont mis en évidence que les erreurs sur les hauteurs $z_i$ des points de l'image 3D peuvent être réduites en réalisant une modulation spécifique des images projetées comprenant des premiers motifs lumineux utilisés pour la détermination de l'image 3D. La modulation est choisie de façon que, éventuellement après la mise en oeuvre d'une étape de démodulation des images acquises par la caméra C ou les caméras C, l'étape 22 décrite précédemment de détermination d'une image 3D du circuit Board peut être mise en oeuvre comme si seuls les premiers motifs avaient été projetés sur le circuit Board. La modulation peut être une modulation additive ou multiplicative.

Selon un mode de réalisation, l'image comprenant les premiers motifs est modulée par une image comprenant des deuxièmes motifs. Les premiers motifs sont caractérisés par un premier pas, correspondant, par exemple, à la distance moyenne séparant deux motifs adjacents parmi les premiers motifs et les deuxièmes motifs sont caractérisés par un deuxième pas qui correspond à la distance moyenne séparant deux motifs adjacents parmi les deuxièmes motifs. En particulier, lorsque les motifs correspondent à des franges périodiques, le pas des motifs correspond à la distance entre deux franges successives. Selon un mode de réalisation, le deuxième pas est inférieur ou égal au premier pas. Les inventeurs ont mis en évidence que la modulation de l'image comprenant les premiers motifs par une image comprenant des deuxièmes motifs ne modifie pas la profondeur de champ du procédé de détermination de l'image 3D.

Selon un mode de réalisation, les premiers motifs ont une orientation privilégiée par rapport à la direction (OX) et les deuxièmes motifs ont une orientation privilégiée différente par rapport à la direction (OX).

Selon un mode de réalisation, le système informatique 16 de contrôle, d'acquisition et de traitement d'images comprend un module de détermination d'une image numérique et le projecteur P est adapté à projeter une image obtenue à partir de cette image numérique. Selon un mode de réalisation, le projecteur P est du type comprenant une lampe émettant un faisceau qui est dirigé vers un moteur optique. Le moteur optique module le faisceau, en fonction de l'image numérique, pour former une image qui est projetée sur le circuit Board. Le moteur optique peut comprendre une matrice active. A titre d'exemple, le moteur optique peut comprendre une matrice d'obturateurs à cristaux liquides ou obturateur LCD (acronyme anglais pour Liquid Cristal Display) qui fonctionne par transmission, le faisceau lumineux traversant l'obturateur LCD. A titre de variante, le moteur optique peut mettre en oeuvre la technologie DLP (acronyme anglais pour Digital Light Processing) qui repose sur l'utilisation d'un dispositif comprenant une matrice de micro-miroirs orientables, le faisceau lumineux se réfléchissant sur ces miroirs. A titre de variante, le moteur optique peut mettre en oeuvre la technologie LCoS (acronyme anglais pour Liquid Cristal on Silicon) qui repose sur l'utilisation d'un dispositif à cristaux liquides, le faisceau lumineux se réfléchissant sur le dispositif. Selon une autre variante, le moteur optique peut mettre en oeuvre la technologie GLV (acronyme anglais pour Grating Light Valve) qui repose sur l'utilisation d'un réseau de diffraction ajustable dynamiquement à base de rubans réflecteurs. Selon un autre mode de réalisation, le projecteur P peut mettre en oeuvre au moins un faisceau laser qui est modulé en fonction de l'image numérique, l'image étant obtenue par un balayage matriciel du faisceau laser modulé.

De façon avantageuse, lorsque le projecteur P est adapté à projeter une image obtenue à partir d'une image numérique, les images projetées modulées peuvent être obtenues de façon simple en modifiant l'image numérique qui commande le projecteur.

Selon un mode de réalisation de modulation additive, la modulation comprend, lors de la projection des images structurées à l'étape 20 décrite précédemment, l'ajout de deuxièmes motifs lumineux spécifiques aux premiers motifs lumineux. Plus précisément, le procédé de détermination d'une image 3D comprend la projection successive de plusieurs images comprenant simultanément les premier et deuxième ensembles de motifs lumineux sur le circuit Board, un premier déphasage étant appliqué aux premiers motifs lumineux entre chaque image projetée et un deuxième déphasage, éventuellement nul, étant appliqué aux deuxièmes motifs lumineux entre chaque image projetée, les premier et deuxième déphasages étant différents.

En outre, le deuxième déphasage appliqué aux deuxièmes motifs lumineux est choisi pour que, lors de la mise en oeuvre du procédé de détermination de l'image 3D du circuit Board, la contribution due à l'intensité lumineuse des deuxièmes motifs lumineux est nulle, c'est-à-dire que, du point de vue de l'algorithme mis en oeuvre pour la détermination de l'image 3D, tout se passe comme si seuls les premiers motifs lumineux étaient présents. De façon avantageuse, le traitement réalisé par le système 16 des images acquises par les caméras n'est pas modifié.

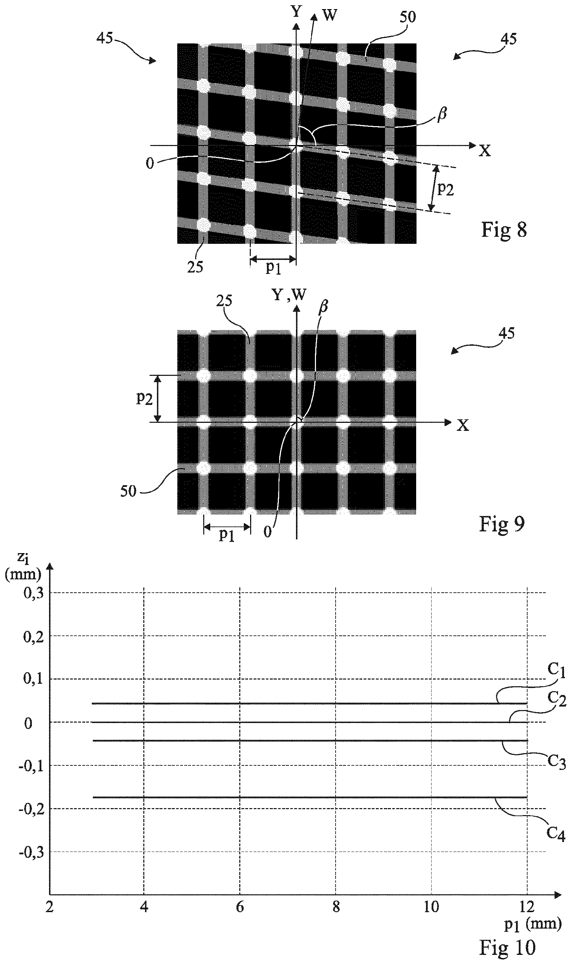

La figure 8 représente un mode de réalisation d'une image 45 comprenant un ensemble de franges supplémentaire 50 en plus de l'ensemble de franges 25 de l'image 24 représentée en figure 5. Dans ce mode de réalisation, les franges 50 sont droites et parallèles. Les franges 50 peuvent avoir une intensité lumineuse qui varie de façon sinusoïdale.

Les franges 50 sont perpendiculaires à une direction (OW) qui est un axe appartenant au plan de référence $Pl_{REF}$ et qui est incliné d'un angle $\beta$ par rapport à la direction (OX). Selon un mode de réalisation, l'angle $\beta$ est compris entre 45° et 135°, de préférence entre 60° et 120°, plus préférentiellement entre 80° et 100°. Les franges 50 sont caractérisées par un pas $p_2$ mesuré selon la direction (OW). Les pas $p_1$ et $p_2$ peuvent être différents. Selon un mode de réalisation, le pas $p_1$ est compris entre 1 mm et 15 mm. Selon un mode de réalisation, le pas $p_2$ est compris entre 1 mm et 15 mm, de préférence entre 1 mm et 10 mm, plus préférentiellement entre 1 mm et 8 mm.

La figure 9 représente un mode de réalisation particulier de l'image 45 dans lequel l'angle $\beta$ est sensiblement égal à 90° et la direction (OW) est confondue avec la direction (OY) .

De façon avantageuse, lorsque le projecteur P comprend un moteur optique, les images projetées, comprenant notamment deux ensembles de franges 25 et 50, peuvent être obtenues de façon simple en modifiant la commande du moteur optique.

A titre de variante, le projecteur P peut être remplacé par deux interféromètres dont l'un projette le premier ensemble de franges et l'autre projette le deuxième ensemble de franges.

Un mode de réalisation plus détaillé des conditions que doit respecter le deuxième déphasage va maintenant être décrit pour un exemple de procédé de détermination d'une image 3D. Toutefois, il est clair que ces conditions vont dépendre du procédé utilisé de détermination de l'image 3D.

A chaque point $Q_i$ correspond un point $^Cq_i$ dans le plan image de la caméra C et un point $^Pq_i$ dans le plan image du projecteur P. On considère un repère $R_C(O_C, X', Y', Z')$ associé à la caméra C dans lequel $O_C$ est le centre optique de la caméra C, la direction Z' est parallèle à l'axe optique de la caméra C et les directions X' et Y' sont perpendiculaires entre elles et perpendiculaires à la direction Z'. Dans le repère $R_C$, pour simplifier la description qui va suivre, on peut considérer de façon approximative que le point $^Cq_i$ a les coordonnées ($^Cu_i$, $^Cv_i$, $f_C$) où $f_C$ est la distance focale de la caméra C. On considère un repère $R_P(O_P, X'', Y'', Z'')$ associé au projecteur P dans lequel $O_P$ est le centre optique du projecteur P, la direction Z'' est parallèle à l'axe optique du projecteur P et les directions X'' et Y'' sont perpendiculaires entre elles et perpendiculaires à la direction Z''. Dans le repère $R_P$, pour simplifier la description qui va suivre, on peut considérer de façon approximative que le point $^Pq_i$ a les coordonnées ($^Pu_i$, $^Pv_i$, $f_P$) où $f_P$ est la distance focale du projecteur P.

De façon générale, en appelant $P_P$ la matrice de projection du projecteur P et $P_C$ la matrice de projection de la caméra C, on a le système d'équations (1) suivant pour chaque point $Q_i$, noté en coordonnées homogènes :

$$\begin{cases} ^Pq_i(z_i) \sim P_P Q_i(z_i) \\ ^Cq_i(z_i) \sim P_C Q_i(z_i) \end{cases} \qquad (1)$$

Chaque point $Q_i$ correspond à l'intersection d'une droite $D_C$ associée à la caméra C et d'une droite $D_P$ associée au projecteur P.

A chaque point $^Pq_i$ de l'image projetée par le projecteur P est associée une phase $\varphi_i(z_i)$. L'intensité lumineuse $I^C(^Cq_i(z_i))$, mesurée par le pixel au point $^Cq_i$ de l'image acquise par la caméra et correspondant au point $Q_i$, suit la relation (2) suivante :

$$I^C(\,^Cq_i(z_i)) = A(z_i) + B(z_i)\cos\varphi_i(z_i) \qquad (2)$$

où $A(z_i)$ est l'intensité lumineuse du fond au point $Q_i$ de l'image et $B(z_i)$ représente l'amplitude entre les intensités minimale et maximale au point $Q_i$ de l'image projetée.

Selon un exemple, le projecteur P projette successivement N images différentes sur le circuit, où N est un nombre entier naturel strictement supérieur à 1, de préférence supérieur ou égal à 4, par exemple d'environ 8.

De façon connue, lorsque seuls les premiers motifs lumineux, décrits précédemment et utilisés pour la détermination de l'image 3D, sont présents, un déphasage de 2n/N est appliqué pour chaque nouvelle image projetée par rapport à la précédente image projetée. L'intensité lumineuse $I_d^C(\,^Cq_i(z_i))$, mesurée par le pixel au point $^Cq_i$ pour la d-ième image acquise par la caméra correspondant au point $Q_i$, suit la relation (3) suivante :

$$I_d^C(\,{}^Cq_i(z_i)) = A + B\cos(\varphi_i(z_i) + \frac{2\pi}{N}d) \qquad (3)$$

où d est un nombre entier qui varie entre 0 et N-1.

On définit le vecteur $\vec{I}_i^C(z_i)$ selon la relation (4) suivante :

$$(4)$$

$$\vec{I}_i^C(z_i) = \begin{pmatrix} I_0^C(\,{}^Cq_i(z_i)) \\ \vdots \\ I_d^C(\,{}^Cq_i(z_i)) \\ \vdots \\ I_{N-1}^C(\,{}^Cq_i(z_i)) \end{pmatrix} = \begin{pmatrix} 1 & 1 & 0 \\ \vdots & \vdots & \vdots \\ 1 & \cos\left(\frac{2\pi}{N}d\right) & -\sin\left(\frac{2\pi}{N}d\right) \\ \vdots & \vdots & \vdots \\ 1 & \cos\left(\frac{2\pi}{N}(N-1)\right) & -\sin\left(\frac{2\pi}{N}(N-1)\right) \end{pmatrix} \begin{pmatrix} A \\ B\cos\varphi_i(z_i) \\ B\sin\varphi_i(z_i) \end{pmatrix}$$

Il s'agit d'un système d'équations linéaires. On montre que la phase $\varphi_i(z_i)$ est donnée par la relation (5) suivante :

$$\varphi_i(z_i) = \arctan\left( -\frac{\sum_{d=0}^{N-1} I_d^C \sin\left(\frac{2\pi}{N}d\right)}{\sum_{d=0}^{N-1} I_d^C \cos\left(\frac{2\pi}{N}d\right)} \right) \qquad (5)$$

Une expression littérale de la hauteur $z_i$ peut généralement être obtenue.
Un exemple d'expression de la hauteur $z_i$ va être décrit dans une configuration particulière dans laquelle le projecteur P et la caméra C sont de type télécentrique et dans laquelle les conditions suivantes sont remplies :

les axes optiques du projecteur P et de la caméra C sont coplanaires ;
les images projetées sont du type représentées en figure 5, c'est-à-dire qu'elles comprennent des franges 25 droites qui s'étendent perpendiculairement à la direction (OX) et dont l'amplitude varie de façon sinusoïdale ; et
les droites Dp sont perpendiculaires au plan $Pl_{REF}$ et les droites $D_C$ font un angle $\theta$ avec le plan $Pl_{REF}$.

Dans cette configuration, le système d'équations (1) peut alors se simplifier selon le système d'équations (6) suivant :

$$\begin{cases} x_i = {}^Pu_i \\ z_i = \frac{-1}{\tan\theta}(x_i - x_{iREF}) \end{cases} \qquad (6)$$

en considérant que le point $Q_{iREF}$ de coordonnées $(x_{iREF}, y_{iREF}, 0)$ est le point du plan de référence $Pl_{REF}$ associé au point ${}^Cq_i$ de la caméra C.
Dans le plan image du projecteur P, l'abscisse ${}^Pu_i$ du point ${}^Pq_i$ suit, par exemple, la relation suivante (7) :

$${}^Pu_i = a\varphi_i(z_i) + b \qquad (7)$$

où a et b sont des nombres réels, a étant égal à $p_1/2\pi$ avec $p_1$ correspondant au pas des franges sinusoïdales 25.
A partir des relations (6) et (7), on obtient la relation (8) suivante :

$$z_i = \frac{p_1}{2\pi\tan\theta}(\varphi_i(Q_{iREF}) - \varphi_i(Q_i)) \qquad (8)$$

où $\varphi_i(Q_{iREF})$ est égal à la phase au point $Q_{iREF}$ du plan de référence $Pl_{REF}$, c'est-à-dire à la phase en l'absence du circuit Board.

Dans le cas où les deuxièmes motifs décrits précédemment sont présents dans les images projetées, l'intensité lumineuse $I^C(^Cq_i(z_i))$, mesurée par le pixel au point $^Cq_i$ de l'image acquise par la caméra et correspondant au point $Q_i$, est égale à la somme d'une intensité lumineuse $^1I^C(^Cq_i(z_i))$ due aux premières franges 25 et d'une intensité lumineuse $^2I^C(^Cq_i(z_i))$ due aux deuxièmes franges 50.

Dans le cas de la mise en oeuvre du procédé de détermination de l'image 3D, la relation (5) peut alors s'écrire sous la forme de la relation (9) suivante :

$$\varphi_i(z_i) = \arctan\left(-\frac{\sum_{d=0}^{N-1}(\,^1I_d^C + \,^2I_d^C)\sin\left(\frac{2\pi}{p}d\right)}{\sum_{d=0}^{N-1}(\,^1I_d^C + \,^2I_d^C)\cos\left(\frac{2\pi}{p}d\right)}\right) \tag{9}$$

Afin que les deuxièmes motifs lumineux ne modifient pas, de façon théorique, le résultat de l'algorithme de détermination de l'image 3D, le deuxième déphasage est choisi de façon à obtenir les relations (10) suivantes :

$$\sum_{d=0}^{N-1}\,^2I_d^C\sin\left(\frac{2\pi}{p}d\right) = 0$$

$$\sum_{d=0}^{N-1}\,^2I_d^C\cos\left(\frac{2\pi}{p}d\right) = 0 \tag{10}$$

A titre d'exemple, pour N égal à 3, les relations (10) sont vérifiées lorsque le deuxième déphasage est nul, c'est-à-dire lorsque les deuxièmes motifs sont identiques (non déphasés) sur les différentes images projetées.

A titre d'exemple, pour N égal à 4, les relations (10) sont vérifiées lorsque les deuxièmes motifs sur la première image projetée sont identiques aux deuxièmes motifs sur la troisième image projetée et que les deuxièmes motifs sur la deuxième image projetée sont identiques aux deuxièmes motifs sur la quatrième image projetée.

Les inventeurs ont mis en évidence que, lorsque des franges 25 et 50, par exemple telles que représentées en figure 8 ou 9 sont projetées sur le circuit Board pour la détermination de l'image 3D, les erreurs sur les points de l'image 3D étaient réduites. Une explication serait que les deuxièmes franges rendent moins régulières les images projetées de sorte que les phénomènes indésirables d'interaction des premières franges 25 avec les matériaux composant le circuit Board sont réduits.

La figure 10 est une figure analogue à la figure 7 qui a été obtenue pour le circuit imprimé 30 représenté en figure 6 lorsque les images projetées comprenaient les ensembles de franges 25, 50 représentés en figure 9. Sur cette figure, les valeurs des hauteurs $z_i$ pour les points $Q_1$ à $Q_4$ correspondent aux dimensions réelles du circuit imprimé et ne varient sensiblement pas en fonction du pas $p_1$.

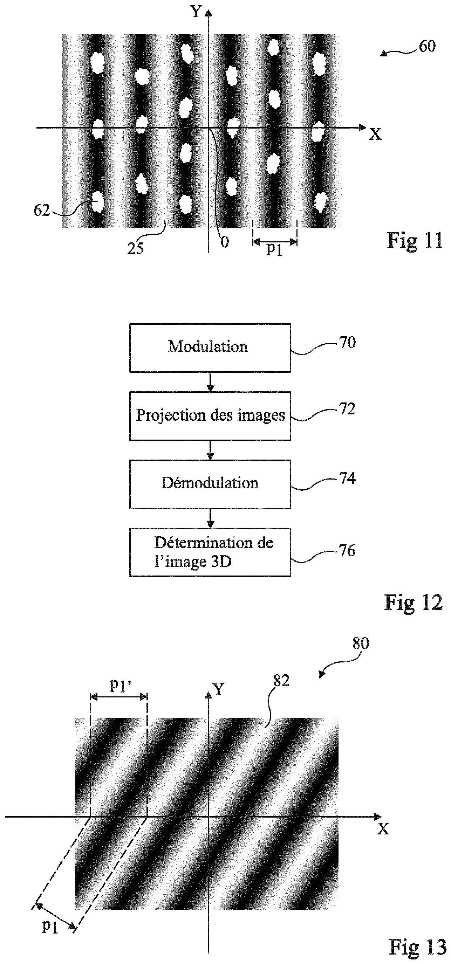

La figure 11 représente un mode de réalisation d'une image 60 dans lequel les deuxièmes motifs ajoutés aux premiers motifs, c'est-à-dire les franges 25 en figure 11, comprennent des taches 62 réparties de façon aléatoire ou pseudo aléatoire. Le pas des taches 62 correspondant, par exemple, à la distance moyenne séparant les centres de deux taches adjacentes est de préférence inférieur ou égal au pas $p_1$. Les courbes de la figure 10 ont également été obtenues lors de la projection des images représentées en figure 11 en appliquant un déphase entre deux projections successives permettant de vérifier les relations (10) précédentes.

Selon un mode de réalisation, une modulation multiplicative de l'image comprenant les premiers motifs est mise en oeuvre, c'est-à-dire que la première image $I^1$ comprenant les premiers motifs est multipliée par la deuxième image $I^2$ comprenant les deuxièmes motifs pour fournir une troisième image $I^3$ qui est projetée. A titre d'exemple, la valeur d'un pixel donné de la troisième image $I^3$ correspond au produit de la valeur du pixel donné de la première image $I^1$ et de la valeur du pixel donné de la deuxième image $I^2$. Un premier déphasage est appliqué aux premiers motifs lumineux entre chaque image projetée et un deuxième déphasage est appliqué aux deuxièmes motifs lumineux entre chaque image projetée, les premier et deuxième déphasages étant différents.

La figure 12 illustre, sous la forme d'un schéma-bloc, les étapes d'un mode de réalisation de procédé de détermination d'une image 3D pouvant être mis en oeuvre par le système 10 lorsqu'une modulation multiplicative est mise en oeuvre.

A l'étape 70, le système informatique 16 de contrôle, d'acquisition et de traitement d'images détermine chaque troisième image à projeter.

A l'étape 72, le projecteur P projette successivement les troisièmes images sur le circuit Board à inspecter. Au cours de la projection de chaque troisième image, au moins une image de l'objet éclairé est acquise par chaque caméra C. Le procédé se poursuit à l'étape 74.

A l'étape 74, le système informatique 16 de contrôle, d'acquisition et de traitement d'images effectue une opération de démodulation sur les images acquises par les caméras. Les images démodulées obtenues correspondent sensiblement aux images qui seraient acquises si la modulation n'avait pas été mise en oeuvre.

A l'étape 76, le système 16 de traitement d'images détermine une image 3D du circuit Board à partir des images 2D démodulées obtenues à l'étape 74.

Selon un mode de réalisation de modulation, un déphasage de $2\pi/N$ est appliqué entre deux premières images $I^1$ et un déphasage de $2\pi/M$ est appliqué entre deux deuxièmes images $I^2$. Il est projeté un nombre N*M de troisièmes images $I^3$ selon la relation (11) suivante :

$$I_{d,k}^3 = I_d^1 \times I_k^2 \qquad\qquad (11)$$

où d est un nombre entier qui varie entre 0 et N-1 et k est un nombre entier qui varie entre 0 et M-1.

L'intensité lumineuse $I_{d,k}^C(\,^C q_i(z_i))$, mesurée par le pixel au point $^C q_i$ pour l'image acquise par la caméra correspondant au point $Q_i$, correspondant à la projection de l'image $I_{d,k}^3$ suit la relation (12) suivante :

$$I_{d,k}^C(\,^C q_i(z_i)) = A + B I_d^1 \times I_k^2 \qquad\qquad (12)$$

Lorsque la modulation précédemment décrite est mise en oeuvre, la démodulation peut être réalisée de la façon suivante. On détermine les paramètres $F_k$ et $G_k$ selon les relations (13) suivantes :

$$F_d = \sum_{k=0}^{M-1} I_{d,k}^C \cos\left(\frac{2\pi}{M}k\right)$$
$$G_d = \sum_{k=0}^{M-1} I_{d,k}^C \sin\left(\frac{2\pi}{M}k\right) \qquad\qquad (13)$$

L'intensité lumineuse $I_d^C(\,^C q_i(z_i))$ qui serait mesurée par le pixel au point $^C q_i$ pour l'image acquise par la caméra correspondant au point $Q_i$, en l'absence de modulation est donnée par la relation (14) suivante :

$$I_d^C(\,^C q_i(z_i)) = \sqrt{(F_d)^2 + (G_d)^2} \qquad\qquad (14)$$

L'image 3D peut alors être déterminée comme cela a été décrit précédemment.

Selon un autre mode de réalisation, dans le cas où les premiers motifs ont un pas caractéristique, la modulation consiste à incliner l'image comprenant les premiers motifs de façon que la projection du pas caractéristique des premiers motifs sur la direction (OX) soit plus importante que le pas caractéristique des premiers motifs. L'image ainsi inclinée est alors projetée.

A titre d'exemple, lorsque les premiers motifs correspondent à des franges parallèles, perpendiculaires à la direction (OX), la modulation consiste à incliner les franges par rapport à la direction (OX) et à projeter les franges ainsi inclinées. L'algorithme mis en oeuvre pour la détermination de l'image 3D n'est pas modifié par rapport à ce qui a été décrit précédemment. De préférence l'angle d'inclinaison est compris entre 45° et 90°

La figure 13 représente un mode de réalisation d'une image 80 comprenant un ensemble de franges 82 inclinées par rapport à la direction (OX) et obtenues à partir de la modulation des franges 25 de l'image 24 représentée en figure 5. Le pas $p_{1'}$ correspond à la projection du pas $p_1$ sur la direction (OX). Les inventeurs ont mis en évidence que les erreurs sur les hauteurs sont réduites lorsque l'image 80 représentée en figure 13 était utilisée pour la détermination de l'image 3D.

Des modes de réalisation particuliers ont été décrits. Diverses variantes et modifications apparaîtront à l'homme de l'art. En particulier, bien qu'un mode de réalisation ait été décrit dans lequel la détermination de l'image 3D est réalisée à partir d'un algorithme mettant en oeuvre la caméra et le projecteur, il est clair que la détermination de l'image 3D peut être mise en oeuvre par un procédé de triangulation mettant en oeuvre au moins deux caméras.

**EP 3 117 181 B1**

**Revendications**

1. Procédé de détermination d'images tridimensionnelles d'un objet (Board), comprenant :

   la projection par au moins un projecteur (P) de plusieurs images (45) sur l'objet, chaque image projetée étant déterminée par modulation de premiers motifs lumineux (25) comprenant la superposition et/ou la multiplication des premiers motifs lumineux (25) et de deuxièmes motifs lumineux (50), les premiers motifs lumineux étant déphasés d'un premier déphasage d'une image projetée à la suivante et les deuxièmes motifs lumineux étant déphasés d'une image projetée à la suivante d'un deuxième déphasage différent du premier déphasage, le deuxième déphasage étant appliqué aux deuxièmes motifs lumineux et étant choisi de sorte que la contribution due à l'intensité lumineuse des deuxièmes motifs est nulle ;
   l'acquisition, pour chaque image projetée (50), d'au moins une image bidimensionnelle de l'objet par au moins un capteur d'images (C), notamment au moins deux capteurs d'images ; et
   la détermination de la hauteur de chaque point de l'objet à partir des images bidimensionnelles acquises comme si seuls les premiers motifs avaient été projetés, la modulation étant sélectionnée de façon que les erreurs de détermination soient inférieures à celles obtenues en l'absence de modulation.

2. Procédé selon la revendication 1, comprenant, en outre, une étape de démodulation des images bidimensionnelles acquises et dans lequel l'étape de détermination de la hauteur de chaque point de l'objet est réalisée à partir des images bidimensionnelles démodulées.

3. Procédé selon la revendication 1 ou 2, dans lequel les premiers motifs (25) ont une première orientation par rapport à une direction privilégiée (OX) du projecteur (P) et du capteur d'images (C) ou des deux capteurs d'images et dans lequel le procédé comprend la projection d'images ayant des franges (82) inclinées par rapport à la direction privilégiée selon une deuxième orientation différente de la première orientation.

4. Procédé selon la revendication 1, dans lequel les premiers motifs lumineux (25) comprennent des premières franges.

5. Procédé selon la revendication 1, dans lequel les deuxièmes motifs lumineux (50 ; 62) comprennent des deuxièmes franges.

6. Procédé selon les revendications 4 et 5, dans lequel les premières franges (25) sont droites et parallèles et dans lequel les deuxièmes franges (50) sont droites et parallèles.

7. Procédé selon la revendication 6, dans lequel les deuxièmes franges (50) sont inclinées par rapport aux premières franges (25) d'un angle compris entre 45° et 135°.

8. Procédé selon l'une quelconque des revendications 1 à 7, dans lequel les premiers motifs lumineux (25) sont périodiques selon un premier pas ($p_1$) compris entre 1 mm et 15 mm.

9. Procédé selon la revendication 1, dans lequel les deuxièmes motifs lumineux (50) sont périodiques selon un deuxième pas ($p_2$) compris entre 1 mm et 15 mm.

10. Système de détermination d'images tridimensionnelles d'un objet (Board), comprenant :

    au moins un projecteur (P) adapté à projeter plusieurs images (45) sur l'objet, chaque image projetée étant déterminée par modulation de premiers motifs lumineux (25), chaque image projetée comprenant la superposition ou la multiplication des premiers motifs lumineux (25) et de deuxièmes motifs lumineux (50), les premiers motifs lumineux étant déphasés d'un premier déphasage d'une image projetée à la suivante et les deuxièmes motifs lumineux étant déphasés d'une image projetée à la suivante d'un deuxième déphasage différent du premier déphasage, le deuxième déphasage étant appliqué aux deuxièmes motifs lumineux et étant choisi de sorte que la contribution due à l'intensité lumineuse de deuxièmes motifs est nulle ;
    au moins un capteur d'images (C), notamment au moins deux capteurs d'images, adapté à acquérir, pour chaque image projetée (50), au moins une image bidimensionnelle de l'objet ; et
    un module (16) de détermination de la hauteur de chaque point de l'objet à partir des images bidimensionnelles acquises comme si seuls les premiers motifs avaient été projetés, la modulation étant sélectionnée de façon que les erreurs de détermination soient inférieures à celles obtenues en l'absence de modulation.

**11.** Système selon la revendication 10, dans lequel les premiers motifs (25) ont une première orientation par rapport à une direction privilégiée (OX) du projecteur (P) et du capteur d'images (C) ou des deux capteurs d'images et dans lequel le projecteur (P) est adapté à projeter des images ayant des franges (82) inclinées par rapport à la direction privilégiée selon une deuxième orientation différente de la première orientation.

**12.** Système selon la revendication 10 ou 11, comprenant un module de fourniture d'images numériques et dans lequel le projecteur (P) est adapté à projeter lesdites plusieurs images (45) sur l'objet, chacune desdites images étant formée par le projecteur à partir de l'une desdites images numériques.

**Patentansprüche**

**1.** Verfahren zum Bestimmen dreidimensionaler Bilder eines Objekts (Platte), das Folgendes aufweist:

Projizieren einer Vielzahl von Bildern (45) durch mindestens einen Projektor (P) auf das Objekt, wobei jedes projizierte Bild durch Modulation von ersten Lichtmustern (25), welche die Übereinanderlagerung und/oder die Multiplikation der ersten Lichtmuster (25) und zweiter Lichtmuster (50) aufweisen, bestimmt wird, wobei die ersten Lichtmuster durch eine erste Phasenverschiebung von einem projizierten Bild zu dem nächsten phasenverschoben werden, und die zweiten Lichtmuster durch eine zweite Phasenverschiebung, die sich von der ersten Phasenverschiebung unterscheidet, von einem projizierten Bild zu dem nächsten phasenverschoben werden, wobei die zweite Phasenverschiebung auf die zweiten Lichtmuster angewendet wird und so gewählt wird, dass der Beitrag durch die Lichtintensität des zweiten Musters null ist;
Erfassen für jedes projizierte Bild (50) von wenigstens einem zweidimensionalen Bild des Objekts durch wenigstens einen Bildsensor (C), insbesondere wenigstens zwei Bildsensoren; und
Bestimmen der Höhe jedes Punkts des Objekts aus den erfassten zweidimensionalen Bildern, als ob nur die ersten Muster projiziert worden wären, wobei die Modulation so gewählt wird, dass die Bestimmungsfehler geringer sind als diejenigen, die ohne eine Modulation erhalten werden würde.

**2.** Verfahren nach Anspruch 1, das ferner einen Schritt des Demodulierens der erfassten zweidimensionalen Bilder aufweist und wobei der Schritt des Bestimmens der Höhe jedes Punkts des Objekts aus den demodulierten zweidimensionalen Bildern ausgeführt wird.

**3.** Verfahren nach Anspruch 1 oder 2, wobei die ersten Muster (25) eine erste Ausrichtung bezüglich einer Hauptrichtung (OX) des Projektors (P) und des Bildsensors (C) oder beider Bildsensoren aufweisen und wobei das Verfahren das Projizieren von Bildern aufweist, die Streifen (82) aufweisen, welche bezüglich der Hauptrichtung gemäß einer zweiten Ausrichtung, die sich von der ersten Ausrichtung unterscheidet, geneigt sind.

**4.** Verfahren nach Anspruch 1, wobei die ersten Lichtmuster (25) erste Streifen aufweisen.

**5.** Verfahren nach Anspruch 1, wobei die zweiten Lichtmuster (50; 62) zweite Streifen aufweisen.

**6.** Verfahren nach Anspruch 4 und 5, wobei die ersten Streifen (25) gerade und parallel sind und wobei die zweiten Streifen (50) gerade und parallel sind.

**7.** Verfahren nach Anspruch 6, wobei die zweiten Streifen (50) bezüglich der ersten Streifen (25) in einem Winkel in dem Bereich von 45° bis 135° geneigt sind.

**8.** Verfahren nach einem der Ansprüche 1 bis 7, wobei die ersten Lichtmuster (25) mit einem ersten Abstand ($p_1$) in dem Bereich von 1 mm bis 15 mm periodisch sind.

**9.** Verfahren nach Anspruch 1, wobei die zweiten Lichtmuster (50) mit einem zweiten Abstand ($p_2$) in dem Bereich von 1 mm bis 15 mm periodisch sind.

**10.** System zum Bestimmen dreidimensionaler Bilder eines Objekts (Platte), das Folgendes aufweist:

wenigstens einen Projektor (P), der geeignet ist zum Projizieren einer Vielzahl von Bildern (45) auf das Objekt, wobei jedes projizierte Bild durch Modulation von ersten Lichtmustern (25) bestimmt wird, wobei jedes projizierte Bild Übereinanderlagerung oder Multiplikation der ersten Lichtmuster (25) und zweiter Lichtmuster (50) aufweist, wobei die ersten Lichtmuster durch eine erste Phasenverschiebung von einem projizierten Bild zu dem nächsten phasenverschoben werden, und die zweiten Lichtmuster durch eine zweite Phasenverschiebung, die sich von der ersten Phasenverschiebung unterscheidet, von einem projizierten Bild zu dem nächsten phasenverschoben werden, wobei die zweite Phasenverschiebung auf die zweiten Lichtmuster angewendet wird und so gewählt wird, das der Beitrag durch die Lichtintensität des zweiten Musters null ist;
wenigstens einen Bildsensor (C), insbesondere wenigstens zwei Bildsensoren, die geeignet sind zum Erfassen für jedes projizierte Bild (50) wenigstens eines zweidimensionalen Bildes des Objekts; und
eine Einheit (16) zum Bestimmen der Höhe jedes Punkts des Objekts aus den erfassten zweidimensionalen Bildern, als ob nur die ersten Muster projiziert worden wären, wobei die Modulation so gewählt wird, dass die Bestimmungsfehler geringer sind als diejenigen, die ohne eine Modulation erhalten werden würden.

11. System nach Anspruch 10, wobei die ersten Muster (25) eine erste Ausrichtung bezüglich einer Hauptrichtung (OX) des Projektors (P) und des Bildsensors (C) oder beider Bildsensoren aufweisen und wobei der Projektor (P) geeignet ist zum Projizieren von Bildern, die Streifen (82) aufweisen, welche bezüglich der Hauptrichtung gemäß einer zweiten Ausrichtung, die sich von der ersten Ausrichtung unterscheidet, geneigt sind.

12. System nach Anspruch 10 oder 11, das eine Einheit zum Liefern digitaler Bilder aufweist, und wobei der Projektor (P) geeignet ist zum Projizieren der Vielzahl von Bildern (45) auf das Objekt, wobei jedes der Bilder durch den Projektor von einem der digitalen Bilder gebildet wird.

**Claims**

1. A method of determining three-dimensional images of an object (Board), comprising:

   the projection by at least one projector (P) of a plurality of images (45) on the object, each projected image being determined by modulation of first light patterns (25) comprising the superimposition and/or the multiplication of the first light patterns (25) and of second light patterns (50), the first light patterns being phase-shifted by a first phase shift from one projected image to the next one and the second light patterns being phase-shifted from one projected image to the next one by a second phase shift different from the first phase shift, the second phase shift being applied to the second light patterns and being selected so that the contribution due to the light intensity of the second patterns is zero;
   the acquisition, for each projected image (50), of at least one two-dimensional image of the object by at least one image sensor (C), particularly at least two image sensors; and
   the determination of the height of each point of the object from the acquired two-dimensional images as if only the first patterns had been projected, the modulation being selected so that the determination errors are smaller than those obtained in the absence of a modulation.

2. The method of claim 1, further comprising a step of demodulating the acquired two-dimensional images and wherein the step of determining the height of each point of the object is carried out from the demodulated two-dimensional images.

3. The method of claim 1 or 2, wherein the first patterns (25) have a first orientation with respect to a main direction (OX) of the projector (P) and of the image sensor (C) or of the two image sensors and wherein the method comprises projecting images having fringes (82) inclined with respect to the main direction according to a second orientation different from the first orientation.

4. The method of claim 1, wherein the first light patterns (25) comprise first fringes.

5. The method of claim 1, wherein the second light patterns (50; 62) comprise second fringes.

6. The method of claims 4 and 5, wherein the first fringes (25) are straight and parallel and wherein the second fringes (50) are straight and parallel.

7. The method of claim 6, wherein the second fringes (50) are inclined with respect to the first fringes (25) by an angle in the range from 45° to 135°.

8. The method of any of claims 1 to 7, wherein the first light patterns (25) are periodic according to a first pitch ($p_1$) in

the range from 1 mm to 15 mm.

9. The method of claim 1, wherein the second light patterns (50) are periodic according to a second pitch ($p_2$) in the range from 1 mm to 15 mm.

10. A system for determining three-dimensional images of an object (Board), comprising:

at least one projector (P) capable of projecting a plurality of images (45) on the object, each projected image being determined by modulation of first light patterns (25), each projected image comprising superimposing or multiplying the first light patterns (25) and second light patterns (50), the first light patterns being phase-shifted by a first phase shift from one projected image to the next one and the second light patterns being phase-shifted from one projected image to the next one by a second phase shift different from the first phase shift, the second phase shift being applied to the second light patterns and being selected so that the contribution due to the light intensity of the second patterns is zero;
at least one image sensor (C), particularly at least two image sensors, capable of acquiring, for each projected image (50), at least one two-dimensional image of the object ; and
a unit (16) for determining the height of each point of the object from the acquired two-dimensional images as if only the first patterns had been projected, the modulation being selected so that the determination errors are smaller than those obtained in the absence of a modulation.

11. The system of claim 10, wherein the first patterns (25) have a first orientation with respect to a main direction (OX) of the projector (P) and of the image sensor (C) or of the two image sensors and wherein the projector (P) is capable of projecting images having fringes (82) inclined with respect to the main direction according to a second orientation different from the first orientation.

12. The system of claim 10 or 11, comprising a unit for supplying digital images and wherein the projector (P) is capable of projecting said plurality of images (45) on the object, each of said images being formed by the projector from one of said digital images.

Fig 1

Fig 2

Fig 3

Projection de plusieurs images structurées — 20

↓

Détermination de l'image 3D — 22

Fig 4

Fig 5

Fig 6

Fig 7

Fig 8

Fig 9

Fig 10

60

62

25 0 p1

Fig 11

Modulation — 70

Projection des images — 72

Démodulation — 74

Détermination de l'image 3D — 76

Fig 12

80

p1' Y 82

X

p1

Fig 13

**EP 3 117 181 B1**

## RÉFÉRENCES CITÉES DANS LA DESCRIPTION

**Documents brevets cités dans la description**

- DE 102007034689
- EP 1251327 A
- US 2011287387 A
- US 7440590 B